# FASCICULE DE BREVET EUROPEEN

(11) **EP 0 979 322 B1**
(45) Date de publication et mention de la délivrance du brevet: **15.09.2004**
(21) Numéro de dépôt: 99907652.4
(22) Date de dépôt: 26.02.1999
(51) Int. Cl.: D03D 13/00, D03D 9/00

(54) **SYSTEME D'ECRAN ALTERNATEUR DE LUMIERE COMPRENANT UN RESEAU A FACTEUR D'OUVERTURE VARIABLE**
ABSCHIRMSYSTEM MIT WECHSELNDER LICHTABSCHIRMUNG, BEINHALTEND EIN NETZ MIT EINSTELLBAREM OFFNUNGSFAKTOR
LIGHT ALTERNATING SCREEN-SYSTEM COMPRISING A NETWORK WITH VARIABLE OPENING FACTOR

(30) Priorité: 27.02.1998 FR 9802650
(43) Date de publication de la demande: 16.02.2000
(73) Titulaire: Hexcel Fabrics, 69100 Villeurbanne (FR)
(72) Inventeur: FORIN, Roger, F-74600 Seynod (FR)
(74) Mandataire: Sarlin, Laure V.
(86) Numéro de dépôt international: PCT/FR1999/000447
(87) Numéro de publication internationale: WO 1999/043879

(56) Documents cités:
- EP-A- 0 624 668
- DE-A- 3 609 845
- FR-A- 2 307 064
- NL-A- 9 500 121
- US-A- 5 007 125

## Description

### DOMAINE TECHNIQUE

La présente invention est relative au domaine des stores ou rideaux des réseaux pouvant être réalisés par tissage de fils pour posséder un facteur d'ouverture déterminé. Au sens de l'invention, il doit être considéré que de tels réseaux délimitent par leurs fils entrelacés, des mailles d'ouverture choisies sans que ce terme de maille puisse laisser supposer que l'objet de l'invention est essentiellement orienté vers les réseaux dont la constitution est obtenue, non pas par tissage, mais par tricotage donnant lieu à la formation de mailles par le ou les fils entrelacés

L'invention concerne les réseaux à mailles qui sont destinés à constituer des rideaux à panneaux et/ou à lamelles ou des stores pouvant être utilisés en disposition interne ou externe par rapport à une ou plusieurs baies vitrées ou analogues.

De tels rideaux ou stores ont généralement pour fonction d'atténuer le passage de lumière dans le cas de forte luminosité et/ou de constituer une sorte d'écran introduisant un facteur d'isolation thermique, plus particulièrement lorsque de tels écrans sont placés en disposition externe par rapport à des baies.

### ART ANTERIEUR

Des réseaux du type ci-dessus sont généralement enduits de matière thermo-plastique, soit par enduction préalable des fils, soit par enduction par trempage, une telle enduction étant destinée à conférer une résistance convenable au vieillissement, plus particulièrement dans le cas de mise en place externe. L'enduction doit aussi être généralement considérée comme ayant une vocation spécifique de liage permettant d'établir par thermosoudage une liaison entre les fils entrelacés qui sont tissés selon une armure qui peut être quelconque dans la mesure où elle laisse subsister un facteur d'ouverture non négligeable, du type de celui des articles vendus en tant qu'écran d'atténuation du passage de la lumière.

Dans les applications rappelées, il doit être considéré que les rideaux et stores du type ci-dessus peuvent être considérés comme apportant satisfaction pour l'une et/ou l'autre des fonctions d'atténuation et d'isolation thermique.

Toutefois, depuis quelque temps, le besoin se fait sentir de disposer d'un réseau qui posséderait un facteur d'ouverture non constant, de manière à pouvoir privilégier un passage ou une absorption plus ou moins importante de lumière dans une zone déterminée dont la localisation dépend essentiellement de l'application.

Au sens de l'invention, la zone déterminée en question peut être celle située à la base d'un rideau ou store ou encore à la partie supérieure, voire dans certains cas, dans la partie médiane dudit rideau ou store considéré dans son état déployé ou déroulé.

Il peut être considéré que la technique antérieure ne permet pas de satisfaire un tel besoin à ce jour, de la connaissance qu'en a la déposante. L'objet de l'invention est justement de pallier une telle lacune et de rendre possible la fourniture d'un réseau à mailles pouvant être produit pour présenter localement une partie à facteur d'ouverture différent selon une zone très nettement délimitée ou, au contraire, faisant apparaître une variation progressive. Le document NL 95 00 121 A décrit bien un réseau à densité variable, mais pas un store ou rideau satisfaisant le besoin identifié par la déposante.

### EXPOSE DE L'INVENTION

Pour atteindre les objectifs visés, le store ou rideau comprenant un réseau conforme à l'invention, pour la constitution d'un écran à fonction d'atténuation de lumière et/ou d'isolation thermique, est caractérisé en ce le réseau est constitué par deux nappes de fils en matière organique ou minérale, entrelacés pour délimiter des mailles définissant localement une zone présentant un facteur d'ouverture des mailles différent de celui du reste du réseau (voir revendication 1).

Diverses autres caractéristiques ressortent de la description faite ci-dessous en référence aux dessins annexés qui montrent, à titre d'exemples non limitatifs, des formes de réalisation de l'objet de l'invention.

### BREVE DESCRIPTION DES DESSINS

**La fig. 1** est une vue en plan d'un réseau pour stores ou rideaux faisant application des dispositions de l'invention.
**La fig. 2** est une élévation schématique montrant un exemple préféré de l'objet de l'invention.
**La fig. 3** est une vue en plan partielle d'un réseau montrant un exemple de réalisation.
**Les fig. 4** à **6** sont des vues en plan partielles illustrant différents modes de réalisation du réseau.

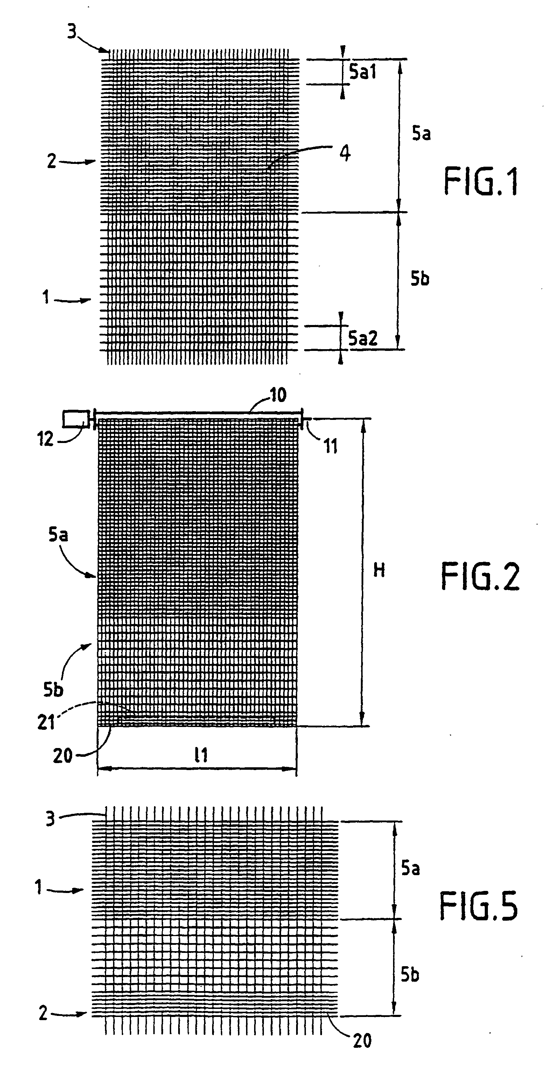

La fig. 1 montre, en vue en plan partielle, un réseau **1** qui est constitué par tissage d'une première nappe de fils **2** entrelacés avec une seconde nappe de fils **3**. Dans l'exemple illustré de façon schématique, l'entrelacement fait intervenir une armure du type taffetas ou de préférence toile, sans que cette armure soit à considérer comme étant un élément essentiel déterminant au sens de l'invention. Au contraire, toute armure appropriée peut être retenue, dès lors que le mode d'entrelacement choisi aboutit à laisser subsister, entre les nappes de fils **2** et **3** entrelacés, des mailles ouvertes **4** déterminant le facteur d'ouverture du réseau **1**.

Les nappes **2** et **3** sont constituées à base de fils en matière organique ou minérale.

Au sens de l'invention, il est prévu de choisir la concentration locale, par exemple des fils constitutifs de la nappe **2**, de manière que la texture résultante fasse apparaître dans une zone telle que **5a** un écartement des fils de la nappe **2** plus faible que dans une zone **5b**. Par contre, les fils de la nappe **3** connaissent un écartement constant qui est par exemple égal à celui présenté par les fils constitutifs de la zone **5a.**

Ainsi, comme cela apparaît à la fig. 1, le réseau désigné dans son ensemble par la référence **1** possède une zone **5a** dont le facteur d'ouverture peut être qualifié de faible par rapport au facteur d'ouverture fort présenté par la zone **5b.**

Au sens de l'invention, il doit être considéré qu'il est possible de choisir une concentration de fils, par exemple de la nappe **2** selon plusieurs zones séparées ou non les unes des autres avec un écartement équivalent ou différent, de telle sorte qu'éventuellement plus de deux zones **5a** et/ou **5b** apparaissent.

Il doit aussi être considéré que l'invention a également pour objet le choix d'une texture pour que l'écartement des fils, par exemple de la nappe **2**, soit progressivement variant, par exemple de la zone **5a**_{**1**} à la zone **5b**_{**2**}**,** de manière que cette dernière présente un facteur d'ouverture plus grand que la zone **5a**_{**1**}**.**

Il doit aussi être considéré qu'au sens de l'invention, la variation d'écartement peut être non constante et par exemple faire intervenir une certaine récurrence dans la succession. Dans les applications préférentielles évoquées ci-après, il peut être considéré que le facteur d'ouverture de la zone **5a** peut être de l'ordre de 2 %, voire préférentiellement 5 %, tandis que le facteur d'ouverture de la zone **5b** peut atteindre 20 % et être situé préférentiellement à 15 %.

La fig. 2 montre un exemple de constitution d'un écran ou d'un rideau destiné à constituer un atténuateur de luminosité ou encore un isolant thermique en étant alors disposé extérieurement à une baie qu'il est chargé d'occulter.

Un coupon ou un panneau de réseau **1** est découpé aux mesures adéquates de manière à pouvoir être lié, par exemple par la bordure de la zone **5a,** telle que **5a**_{**1**} à un mandrin d'enroulement **10** monté sur des axes **11** et susceptible d'être entraîné en rotation réversible par un mécanisme **12** à commande manuelle ou électrique. Le mandrin **10** permet d'enrouler ou de dérouler, comme illustré par la fig. 2, le coupon de réseau **1,** de telle sorte que dans l'état déroulé, la zone **5a** soit située immédiatement à la suite du mandrin **10** alors que la zone **5b** se trouve disposée toujours en direction de la partie basse de la baie devant être occultée.

De cette manière, un facteur d'atténuation de lumière intervient par la zone **5a** tandis que la zone **5b** laisse passer une luminosité adaptée pour assurer un éclairement et un confort suffisant sans qu'il en résulte pour les occupants du local équipé d'un tel rideau, un quelconque risque d'éblouissement.

Dans une telle application, il est fréquent de disposer d'un coupon dont la zone **5a** occupe une hauteur de l'ordre de deux tiers de la hauteur **H** du rideau déroulé alors que la zone **5b** en occupe le tiers restant.

Il doit bien entendu être considéré que ces données ne sont pas essentielles au sens de l'invention et que selon les applications, les fabrications concernées peuvent faire intervenir des étendues de zones **5a** et **5b** différentes. Il en est bien évidemment de même si les zones à facteur d'ouverture variable sont en un nombre supérieur à deux.

### MEILLEURE MANIERE DE REALISER L'INVENTION

La réalisation d'un réseau **1** répondant aux caractéristiques ci-dessus peut être assurée de plusieurs façons différentes.

L'une des meilleures techniques consiste à ourdir la nappe **2** en tant que nappe de fils de chaîne sur une largeur **L** correspondant sensiblement à une hauteur maximale d'utilisation future telle que la hauteur **H** selon la fig. 2 lorsqu'il s'agit de constituer un store ou un rideau capable d'occulter des fenêtres ou des baies de caractéristiques dimensionnelles standardisées.

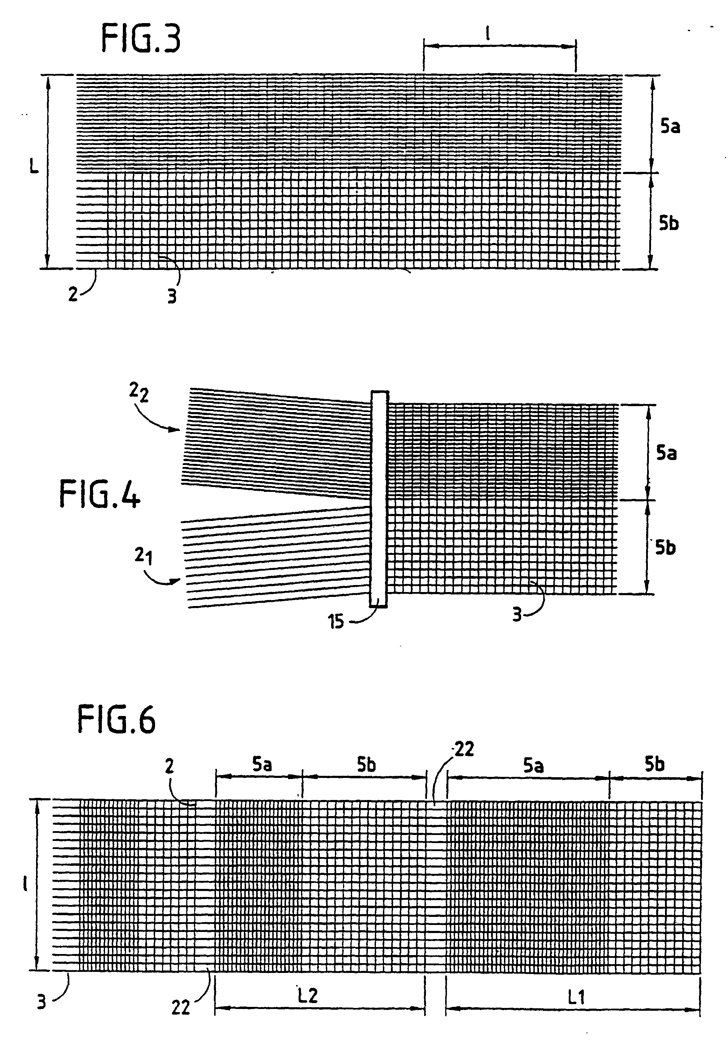

Comme le montre la fig. 3, l'établissement de la nappe de fils de chaîne **2** fait intervenir une concentration variable de ces fils, par exemple selon les deux zones **5a** et **5b** respectivement qualifiées de faible facteur d'ouverture et de fort facteur d'ouverture. Selon l'exemple, les zones **5a** et **5b** sont sensiblement équivalentes en étendue transversale, mais il doit bien évidemment être considéré au sens de l'invention que des étendues différentes et variables d'un produit à un autre peuvent être conférées aux zones **5a** et **5b.** De même, il apparaît que la concentration des fils de chaîne est constante, pour chacune des zones **5a** et **5b.** Il pourrait en être tout autrement en prévoyant une variation progressive ou dégressive de l'une à l'autre des zones, voire successivement de l'une à une autre lorsque la largeur **L** est occupée par un nombre de zones supérieures à deux.

La nappe de fils **2** peut être établie à partir d'une seule ensouple, comme cela ressort de la fig. 3, voire à partir de deux ou plus, comme illustré par la fig. 4. Il peut, dans un tel cas, être avantageux d'assurer le guidage spécifique des fils des parties de nappes correspondant aux zones **5a** et **5b** par l'intermédiaire d'un peigne ou analogue **15**.

Le tissage du réseau à partir de l'établissement de la nappe de fils de chaîne fait intervenir ensuite l'insertion des fils constitutifs de la nappe **3** et formant alors dans l'exemple des fils de trame. Cette insertion intervient avec une ouverture des fils de chaîne en fonction de l'armure choisie, toutes ces dispositions relevant de la connaissance de l'homme de métier.

Le réseau est tissé de manière connue sur de telles bases et peut, après enduction, enroulement et constitution de bobines, être utilisé à la déroulée en étant coupé parallèlement aux fils de trame **3** de telle sorte qu'une largeur élémentaire **1** corresponde à la largeur d'un store ou rideau définitivement constitué.

En d'autres termes, le réseau est tissé de telle manière que la coupe transversale permette de disposer de coupons ou panneaux répondant aux caractéristiques dimensionnelles devant être exigées pour la constitution d'un store ou rideau, chaque coupon ou panneau correspondant et répondant aux exigences de présence d'au moins une zone à facteur d'ouverture différent du facteur d'ouverture du reste du coupon.

Dans un tel mode de réalisation, il peut être considéré que la laize obtenue lors de la fabrication du réseau offre un comportement mécanique qui ne soit pas de nature à permettre un enroulement convenable en raison d'une réponse mécanique localement différente à une sollicitation de traction.

Pour harmoniser une telle réponse, il est avantageux selon l'invention de réaliser le réseau de manière à faire comporter en lisière de la zone **5b** de fort facteur d'ouverture, une bordure **20** dans laquelle les fils de chaîne constitutifs présentent une concentration proche, sinon identique de celle présentée par la zone **5a** de faible facteur d'ouverture.

De cette manière, la laize produite comporte deux lisières à comportement mécanique voisin, sinon identique, permettant les manipulations, les enroulements ou les traitements ultérieurs sans risque de déformation.

Au sens de l'invention, cette disposition de réalisation est aussi avantageusement mise à profit pour conférer à la partie **5b**_{**2**} occupée par la lisière **20** une résistance mécanique permettant de réaliser facilement, soit une fixation du coupon sur un mandrin d'enroulement-déroulement tel que **10**, soit la liaison avec une barre de charge **21** comme illustrée par la fig. 2.

Dans ce premier mode de réalisation, tel que cela ressort de ce qui précède, la laize de réseau ou tissu obtenu peut être coupée facilement en travers sur une largeur qui correspond à la longueur de la laize considérée par rapport au sens de production, afin de fournir une pièce élémentaire dont la dimension, selon la mesure **l,** est choisie lors de la coupe pour correspondre à la largeur du rideau ou du store devant être finalement réalisé dans l'application visée. Une telle pièce élémentaire ou coupon peut alors être aisément adapté sur le mandrin **10** dans un sens ou dans l'autre pour faire apparaître dans l'état déroulé, la zone de faible ou de fort facteur d'ouverture, soit en partie haute, soit en partie basse selon l'application visée.

La fig. 6 montre de façon schématique une autre méthode de fabrication du réseau à partir de l'établissement, en tant que nappe de fils de chaîne, des fils **3** qui constituaient dans l'exemple précédent les fils de trame. Dans un tel exemple, les fils **3** sont établis pour présenter un écartement constant sur toute la largeur **l** qui peut par exemple, mais de façon non obligée, correspondre à une largeur d'utilisation future d'un rideau d'occultation d'une baie répondant à des caractéristiques dimensionnelles standardisées et tel que cela ressort de la fig. 2.

Le réseau est obtenu en procédant ensuite à l'insertion des fils 2 qui constituent les fils de trame et en adoptant pour cette insertion un pas tel qu'ils permettent d'obtenir des zones successives telles que **5b-5a** à facteur d'ouverture variable.

La fig. 6 montre un exemple de réalisation dans lequel, par programme d'insertion, il est possible d'obtenir un segment de laize **L1** incluant deux zones **5a** et **5b** et un segment **L2** de plus faible longueur possédant également deux zones **5a** et **5b** qui sont toutefois établies pour couvrir des étendues différentes de celles du segment **L1.**

Dans une telle méthode, c'est donc la concentration et le pas des fils de trame **2** qui permettent de réaliser les zones à facteur d'ouverture variable. Un tel type de fabrication permet en conséquence de produire en succession des segments **L1** à **Ln** qui peuvent être séparés les uns des autres par des bandes de découpe **22** pour faciliter l'utilisation ultérieure.

Il doit être compris au sens de l'invention que le réseau initial peut être découpé pour produire des lamelles utilisées comme cela est connu pour la constitution d'un écran.

L'invention n'est pas limitée aux exemples décrits et représentés, car diverses modifications peuvent y être apportées sans sortir de son cadre.

### APPLICATION INDUSTRIELLE

Si store ou rideau comprenant un réseau selon l'invention peut être mis en oeuvre pour différentes applications d'écrans, l'une des préférées est celle concernant la constitution de rideaux-écrans atténuateurs de lumière.

## Revendications

1. Store ou rideau associant un mandrin d'enroulement à un réseau destiné à la constitution d'un écran atténuateur de lumière, ledit réseau étant constitué par deux nappes de fils en matière organique ou minérale entrelacés pour délimiter des mailles, **caractérisé en ce que** les fils de l'une des nappes du réseau présentent un écartement constant, les fils de l'autre nappe présentent un écartement variable, de façon à définir localement au moins une zone (5a ou 5b) présentant un facteur d'ouverture de mailles différent du reste du réseau et **en ce que** ledit réseau est lié au mandrin d'enroulement par une bordure de liaison qui s'étend parallèlement aux fils de la nappe présentant un écartement variable.

2. Store ou rideau selon la revendication 1, **caractérisé en ce que** la bordure de liaison au mandrin d'enroulement présente un facteur d'ouverture plus faible que celui du reste du réseau.

3. Store ou rideau selon la revendication 1 ou 2, **caractérisé en ce que** la zone du réseau présentant le facteur d'ouverture différent fait partie intégrante d'une texture choisie pour que l'écartement des fils de l'une au moins des nappes entrelacées varie de manière progressive.

4. Store ou rideau selon la revendication 1 ou 2, **caractérisée en ce que** la zone du réseau présentant le facteur d'ouverture différent fait partie intégrante d'une texture choisie pour que l'écartement des fils de l'une au moins des nappes entrelacées soit constant pour toute l'étendue de ladite zone.

5. Store ou rideau selon la revendication 1, 2 ou 4, **caractérisé en ce qu'**il comporte au moins une zone **(5a)** à facteur d'ouverture faible et au moins une zone (**5b**) à facteur d'ouverture fort.

6. Store ou rideau selon la revendication 5, **caractérisé en ce que** la zone à facteur d'ouverture faible comprend une concentration de fils de chaîne plus élevée que celle de la zone à facteur d'ouverture fort.

7. Store ou rideau selon la revendication 5 et/ou 6, **caractérisé en ce que** la zone à facteur d'ouverture faible comprend une concentration de fils de trame plus élevée que celle de la zone à facteur d'ouverture fort.

8. Store ou rideau selon la revendication 1, 2, 4, 5, 6 ou 7, **caractérisé en ce qu'**il comprend une zone à faible facteur d'ouverture et une zone à fort facteur d'ouverture qui est bordée par une lisière (**20**) présentant un faible facteur d'ouverture.

9. Store ou rideau selon l'une des revendications 1 à 8, **caractérisé en ce que** les facteurs d'ouverture sont compris entre 2 et 20 % et préférentiellement entre 5 et 15%.

## Patentansprüche

1. Rollo oder Vorhang, das einen Aufrolldorn mit einem Netz kombiniert, das dazu bestimmt ist, einen lichtdämpfenden Schirm zu bilden, wobei das Netz aus zwei Floren Fäden aus organischem oder mineralischem Werkstoff besteht, die verwebt sind, um Maschen abzugrenzen, **dadurch gekennzeichnet, dass** die Fäden eines der Flore des Netzes einen konstanten Abstand aufweisen, während die Fäden des anderen Flors einen veränderlichen Abstand aufweisen, um lokal mindestens eine Zone (5a oder 5b) zu bilden, die einen Maschenöffnungsfaktor besitzt, der vom Rest des Netzes unterschieden ist, und dadurch, dass das Netz mit dem Aufrolldorn durch einen Verbindungsrand verbunden ist, der sich parallel zu den Fäden des Flors erstreckt, das einen variablen Abstand aufweist.

2. Rollo oder Vorhang nach Anspruch 1, **dadurch gekennzeichnet, dass** der Verbindungsrand am Aufrolldorn einen Öffnungsfaktor aufweist, der kleiner ist als der des Rests des Netzes.

3. Rollo oder Vorhang nach Anspruch 1 oder 2, **dadurch gekennzeichnet, dass** die Zone des Netzes, die einen unterschiedlichen Öffnungsfaktor aufweist, fester Bestandteil einer Textur ist, die so ausgewählt ist, dass der Abstand der Fäden mindestens eines der verwebten Flore allmählich variiert.

4. Rollo oder Vorhang nach Anspruch 1 oder 2, **dadurch gekennzeichnet, dass** die Zone des Netzes, die einen unterschiedlichen Öffnungsfaktor aufweist, fester Bestandteil einer Textur ist, die so ausgewählt ist, dass der Abstand der Fäden mindestens eines der verwebten Flore über die ganze Weite der Zone konstant ist.

5. Rollo oder Vorhang nach Anspruch 1, 2 oder 4, **dadurch gekennzeichnet, dass** es/er mindestens eine Zone (5a) mit kleinem Öffnungsfaktor und mindestens eine Zone (5b) mit großem Öffnungsfaktor umfasst.

6. Rollo oder Vorhang nach Anspruch 5, **dadurch gekennzeichnet, dass** die Zone mit kleinem Öffnungsfaktor eine höhere Konzentration an Kettfäden aufweist als die Zone mit großem Öffnungsfaktor.

7. Rollo oder Vorhang nach Anspruch 5 und/oder 6, **dadurch gekennzeichnet, dass** die Zone mit kleinem Öffnungsfaktor eine Konzentration an Schussfäden umfasst, die größer ist als die der Zone mit großem Öffnungsfaktor.

8. Rollo oder Vorhang nach Anspruch 1, 2, 4, 5, 6 oder 7, **dadurch gekennzeichnet, dass** es/er eine Zone mit kleinem Öffnungsfaktor und eine Zone mit großem Öffnungsfaktor umfasst, die von einem Rand (20) umrandet ist, der einen kleinen Öffnungsfaktor aufweist.

9. Rollo oder Vorhang nach einem der Ansprüche 1 bis 8, **dadurch gekennzeichnet, dass** die Öffnungsfaktoren zwischen 2 und 20 %, vorzugsweise zwischen 5 und 15 % liegen.

## Claims

1. A blind or curtain associating a roll-up core with a web for constituting a light attenuating screen, said web being made-up of two sheets of threads of organic or inorganic material that are interlaced to define meshes, **characterized in that** the threads of one of the sheets of the web have constant spacing, the threads of the other sheet have variable spacing, so as to locally define at least one zone (5a or 5b) that has a mesh void factor different from the remainder of the web and **in that** said web is connected to the roll-up core by a connecting border which extends parallel to the threads of the sheet having variable spacing.

2. The blind or curtain according to claim 1, **characterized in that** the border connecting to the roll-up core has a smaller void factor than that of the remainder of the web.

3. The blind or curtain according to claim 1 or 2, **characterized in that** the zone of the web having the different void factor forms an integral portion of a fabric so that the spacing of the threads of at least one of the interlaced sheets varies progressively.

4. The blind or curtain according to claim 1 or 2, **characterized in that** the zone of the web having the different void factor forms an integral portion of a fabric so that the spacing of the threads of at least one of the interlaced sheets is constant over the full extent of said zone.

5. The blind or curtain according to claim 1, 2 or 4, **characterized in that** it includes at least one zone (5a) of small void factor and at least one zone (5b) of large void factor.

6. The blind or curtain according to claim 5, **characterized in that** the zone of small void factor comprises a higher concentration of weft threads than that of the zone having a small void factor.

7. The blind or curtain according to claim 5 and/or 6, **characterized in that** the zone having a small void factor comprises a higher concentration of weft threads than that of the zone having a large void factor.

8. The blind or curtain according to claim 1, 2, 4, 5, 6 or 7, **characterized in that** it comprises a zone having a small void factor and a zone having a large void factor which is bordered by a margin (20) having a small void factor.

9. The blind or curtain according to any of claims 1 to 8, **characterized in that** the void factors are between 2 and 20% and preferably between 5 and 15%.
